# EUROPÄISCHE PATENTSCHRIFT

(11) **EP 1 741 758 B1**
(45) Veröffentlichungstag und Bekanntmachung des Hinweises auf die Patenterteilung: **05.11.2008**
(21) Anmeldenummer: 05014860.0
(22) Anmeldetag: 08.07.2005
(51) Int. Cl.: C09D 5/00

(54) **Farbzubereitung**
Colour composition
Composition de couleur

(43) Veröffentlichungstag der Anmeldung: 10.01.2007
(73) Patentinhaber: Zellaerosol GmbH, 79669 Zell im Wiesental (DE)
(72) Erfinder: Fessmann, Peter, 79669 Zell im Wiesental (DE); Rösch, Peter, 79541 Lörrach (DE)
(74) Vertreter: Richter, Joachim

(56) Entgegenhaltungen:
- US-A- 3 919 451
- US-A1- 2004 258 627

## Beschreibung

Die Erfindung betrifft eine Farbzubereitung, die Bindemittel, Füllstoffe und Pigmente beinhaltet.

Farbzubereitungen der eingangs genannten Art, soweit sie mittels Druckgaspackungen (Spraydosen) versprüht werden, dienen im Wesentlichen zur Lackierung, Markierung und Beschriftung von glatten, nicht saugfähigen Oberflächen. Der aufgetragene Lackfilm soll möglichst gleichmäßig, flächig verlaufend und deckend sein. Dabei können geringe Wachszusätze in der Farbzubereitung als Mattierungsmittel dienen, um den Glanzgrad des Lackfilms zu beeinflussen. Die Wachszusätze dieser Farbzubereitungen dienen hierbei jedoch weder als Füllstoff noch als Bindemittel für Farbpigmente.

Auf rauen, saugfähigen und stark strukturierten Untergründen, wie z. B. Baumrinden oder Sägeschnittflächen sind diese Farbzubereitungen nicht deckend und werden in Folge der Kapillarwirkung dieser Untergründe sehr stark, zum Teil bis zur Unsichtbarkeit, aufgesaugt. Aus diesem Grunde sind konventionelle Lackzubereitungen zum Versprühen mittels Druckgaspackungen (Spraydosen) zur Lackierung, Markierung und Beschriftung solcher Untergründe ungeeignet.

Um auf rauen, saugfähigen und stark strukturierten Untergründen, wie z. B. Baumrinden oder Sägeschnittflächen Markierungen und Beschriftungen aufzubringen, ist es erforderlich, durch geeignete Rezepturgestaltung der Farbzubereitung dem Kapillareffekt entgegenzuwirken. Dies kann durch Rezepturmodifikationen, z. B. durch die Erhöhung der in der Lackbranche üblicherweise verwendeten Füllstoffe, Bindemittel oder Pigmente erfolgen. Das Erscheinungsbild des Sprühauftrags entspricht dann weitgehend dem der Oberflächenlackierung

Das US 3 919 451 offenbart Schaumüberzugsformulierungen. Dabei können insbesondere Füllstoffe, Färbemittel und Wachse der Formulierung zugeführt werden, um Produkte mit spezifischen Eigenschaften zu erhalten. Das US 3 919 451 führt Beispiele für Füllstoffe auf, die verwendet werden können. Diese sind Tone, Glimmer, Calciumcarbonat, Bentonit und Kieselerde. Beispiele für Färbemittel, die in dem US 3 919 451 genannt werden, sind Farbstoffe, die aus organischen und anorganischen Pigmenten hergestellt werden, insbesondere Dispersion der Pigmente in Wasser mit einem Dispergierungsmittel und einem Schutzkolloid, Eisenoxidpigmente, Anatas (Titandioxid) oder dgl.

Als Beispiel in dem US 3 919 451 für ein Wachs ist Polyethylenwachs, d. h. ein synthetisches Wachs angeführt.

Insbesondere in der Forst- und Landwirtschaft aber auch in der holzverarbeitenden Industrie sowie im Hoch-, Tief- und Leitungsbaugewerbe werden für die Markierung auf rauen, saugfähigen und stark strukturierten Untergründen jedoch Farbzubereitungen benötigt, die sich sowohl durch ihre hohe Deckkraft und eine voluminöse Schichtdicke auszeichnen, als auch durch ihre Eigenschaft nicht vom Untergrund aufgesogen zu werden.

Es ist daher Aufgabe der Erfindung, eine Farbzubereitung zur Verfügung zu stellen, die sich sowohl durch ihre hohe Deckkraft und eine voluminöse Schichtdicke auszeichnet, als auch durch ihre Eigenschaft nicht vom Untergrund aufgesogen zu werden.

Erfindungsgemäß wird diese Aufgabenstellung durch die Merkmale des Anspruchs 1 gelöst.

Der Vorteil der Erfindung ist es, dass aufgrund des Paraffinanteils in der Farbzubereitung eine hervorragende Deckkraft auf Baumrinden, Borken, Längs- und Querschnitte von gesägten Hölzern erzielt wird. Entwicklungsarbeiten haben gezeigt, dass dieser Effekt auf die Fixierung der Pigmente im Paraffinwachs in Verbindung mit den Bindemitteln zurück zu führen ist.

Der Erfindung liegt darüber hinaus die Erkenntnis zugrunde, dass die in der Druckgaspackung (Spraydose) vorliegende Mischform zwischen Lösung und Suspension des Wachses in der Farbzubereitung und Treibgasen beim Versprühen einen im Gegensatz zu konventionellen Spraylacken untypischen, schaumigen Wachsauftrag neuartiger Textur mit besonders hohem Schichtvolumen entstehen lässt. Dieser Schaumauftrag verfestigt sich rasch durch die von der Verdunstungskälte der Treibgase bewirkte Erstarrung des Wachses und härtet durch die Verdunstung der Lösungsmittel zu einem erhabenen Belag nach. Die bei herkömmlichen Lacken für die Farbintensität nachteilige Kapillarwirkung saugfähiger Untergründe ist gegenüber der Wachsschicht praktisch wirkungslos, Im Vergleich zu den konventionellen Produkten ist das Resultat ein voluminös erhabener Wachsbelag, der Rauheiten und die Rissigkeit des Untergrundes überlegen egalisiert, um mit seiner großen Oberfläche die eingebetteten Farbpartikel besonders intensiv zur Geltung gelangen lässt. Die konventionellen Farbfüllstoffe und Teile des Bindemittels sind in der erfindungsgemäßen Farbzubereitung größtenteils durch einen besonders hohen Wachsanteil substituiert.

Mit der erfindungsgemäßen Farbzubereitung lässt sich bei Applikation mittels der Druckgaspackung (Spraydose) ein um ein Vielfaches höheres Schichtvolumen erzeugen, als dies bei gleicher Applikationsmenge mit Farbzubereitungen möglich ist, deren konsistenzgebende Bestandteile auf der Basis von konventionellen Füllstoffen und Bindemitteln sowie Pigmenten beruhen.

Bei Wachsen handelt es sich bekanntlich um eine Reihe natürlicher oder synthetischer organischer Stoffe, die in der Regel folgende Eigenschaften aufweisen: Sie sind bis 20 °C knetbar, fest bis brüchig hart, grob- bis feinkristallin, durchscheinend bis opak, jedoch nicht glasartig. Sie schmelzen erst oberhalb 40 °C ohne Zersetzung und gehen wenig oberhalb des Schmelzpunktes in den schmelzflüssigen, niedrig viskosen Zustand über. Die Schmelze ist nicht fadenziehend, aber tropfend. Konsistenz und Löslichkeit sind stark temperaturabhängig. Wachse sind unter leichtem Druck polierbar. Die Zusammensetzung und chemische Struktur von Wachsen ist je nach Herkunft sehr unterschiedlich; sie reicht von einfachen Estern (Wachsestern) aus langkettigen, linearen Carbonsäuren und entsprechenden einwertigen und mehrwertigen Alkoholen bis zu komplizierten synthetischen Produkten, bei denen sich Schmelzbereich und andere Eigenschaften durch Modifizierung gezielt ansteuern lassen (Römpp-Lexikon, Lacke und Druckfarben, Seite 615, Thieme-Verlag).

Aus verfahrenstechnischen Gründen sollte das Wachs geschmolzen in die Farbzubereitung eingearbeitet werden.

Als Treibmittel für die Druckgaspackung (Spraydose) können unter Druck verflüssigte Gase, vorzugsweise n-Butan, iso-Butan, Propan, Butan, Dimethylether sowie deren Mischungen und/oder komprimierte Gase, wie C0₂, N₂, N₂0 sowie deren Mischungen Verwendung finden. Die Farbzubereitung und Teile des Treibmittels können sich miteinander mischen und/oder ineinander lösen.

Die in der Farbzubereitung zum Einsatz kommenden Pigmente können sowohl natürlicher oder synthetischer Natur sein (anorganisch oder organisch). Dazu gehören auch die so genannten Tagesleuchtpigmente (Lumineszenzfarbstoffe). Es können auch Mischungen dieser Pigmentarten zum Einsatz kommen.

Die Erfindung sieht außerdem ein Verfahren zur Herstellung einer Farbzubereitung vor, welcher Bindemittel, Füllstoffe und Pigmente beigegeben werden. Als viskositätssteigernder Füllstoff ist der Farbzubereitung Wachs zugegeben. Diese Farbzubereitung in Verbindung mit Treibmittel stellt den Inhalt der Druckgaspackung, insbesondere der Spraydose dar, die in besonderer Weise geeignet ist, Markierungen auf, rauen, saugfähigen und stark strukturierten Untergründen wie z. B. Baumrinden oder Sägeschnittflächen anzubringen.

Zudem sieht die Erfindung vor, dass die erfindungsgemäße Farbzubereitung zur Markierung in der Forstwirtschaft, Landwirtschaft und holzverarbeitenden Industrie sowie in Hoch-, Tief-, Leitungsbaugewerbe sowie in Gartenbaubetrieben und bei Sprayartanwendungen (Graffiti) verwendet wird.

## Patentansprüche

1. Farbzubereitung, die Bindemittel, Füllstoffe und Pigmente beinhaltet,
**dadurch gekennzeichnet**
**dass** Wachs als Bindemittel und Füllstoff dient, wobei die Farbzubereitung und ein Treibmittel gemeinsam in eine Druckgaspackung, insbesondere in eine Spraydose, abgefüllt sind und das Wachs in der Farbzubereitung gelöstes Paraffin-Wachs ist.

2. Farbzubereitung nach Anspruch 1
**dadurch gekennzeichnet,**
**dass** das Treibmittel aus unter Druck verflüssigten Gasen, vorzugsweise n-Butan, iso-Butan, Propan, Butan, Dimethylether sowie deren Mischungen besteht.

3. Farbzubereitung nach Anspruch 1,
**dadurch gekennzeichnet,**
**dass** das Treibmittel aus komprimierten Gasen, wie C02, N2, N20 sowie deren Mischungen besteht.

4. Farbzubereitung nach Anspruch 1,
**dadurch gekennzeichnet,**
**dass** das Treibmittel aus einer Mischung von unter Druck verflüssigten und komprimierten Gasen besteht.

5. Farbzubereitung nach einem der vorhergehenden Ansprüche,
**dadurch gekennzeichnet,**
**dass** die Pigmente als natürlich vorkommende Pigmente vorliegen, die anorganisch oder organisch sind.

6. Farbzubereitung nach einem der Ansprüche 1 bis 4,
**dadurch gekennzeichnet,**
**dass** die Pigmente als synthetische Pigmente vorliegen, die anorganisch oder organisch sind.

7. Farbzubereitung nach einem der Ansprüche 1 bis 6,
**dadurch gekennzeichnet,**
**dass** die Pigmente als Tagesleuchtpigmente (Lumineszenzfarbstoffe) vorliegen.

8. Farbzubereitung nach einem der Ansprüche 5 bis 7,
**dadurch gekennzeichnet,**
**dass** die Pigmente als Mischung der verschiedenen Pigmentarten vorliegen.

9. Verfahren zur Herstellung einer Farbzubereitung, bei dem Bindemittel, Füllstoffe und Pigmente eingearbeitet werden,
**dadurch gekennzeichnet,**
**dass** Wachs als Bindemittel und Füllstoff eingearbeitet wird, wobei die Farbzubereitung mit einem Treibmittel in eine Druckgaspackung, insbesondere in eine Spraydose, abgefüllt wird und das Wachs in der Farbzubereitung gelöstes Paraffin-Wachs ist.

10. Verfahren nach Anspruch 1,
**dadurch gekennzeichnet,**
**dass** Wachs als Bindemittel und Füllstoff in eine Mischung mit konventionellen Bindemitteln und Füllstoffen eingearbeitet wird.

11. Verfahren nach Anspruch 9 oder 10,
**dadurch gekennzeichnet,**
**dass** als Treibmittel ein unter Druck verflüssigtes Gas zugegeben wird

12. Verfahren nach Anspruch 9 oder 10,
**dadurch gekennzeichnet,**
**dass** als Treibmittel ein komprimiertes Gas zugegeben wird

13. Verfahren nach Anspruch 9 oder 10,
**dadurch gekennzeichnet,**
**dass** als Treibmittel eine Mischung aus unter Druck verflüssigten Gasen mit komprimierten Gasen zugegeben wird.

14. Verfahren nach einem der Ansprüche 11 bis 13,
**dadurch gekennzeichnet,**
**dass** als Treibmittel ein Treibgas eingesetzt wird, welches sich teilweise in der Farbzubereitung lösen und/oder mit dieser vermischen kann.

15. Verfahren nach Anspruch 14,
**dadurch gekennzeichnet,**
**dass** das teilweise gelöste oder mit der Farbzubereitung vermischte Gas aus CO₂ und/oder N₂ und/oder N₂O besteht

16. Verfahren nach einem der Ansprüche 9 bis 15,
**dadurch gekennzeichnet,**
**dass** die Pigmente als natürlich vorkommende Pigmente eingearbeitet werden, die anorganischer oder organischer Natur sind.

17. Verfahren nach einem der Ansprüche 9 bis 15,
**dadurch gekennzeichnet,**
**dass** die Pigmente als synthetische Pigmente eingearbeitet werden, die anorganischer oder organischer Natur sind.

18. Verfahren nach einem der vorhergehenden Ansprüche,
**dadurch gekennzeichnet,**
**dass** die Pigmente als Tagesleuchtpigmente (Lumineszenzfarbstoffe) eingearbeitet werden.

19. Verwendung einer Farbzubereitung oder einer Farbzubereitung nach dem Herstellungsverfahren gemäß einem der vorstehenden Ansprüche zur Markierung in der Forst- und/oder Landwirtschaft.

20. Verwendung einer Farbzubereitung oder einer Farbzubereitung nach dem Herstellungsverfahren gemäß einem der vorhergehenden Ansprüche zur Markierung in der holzverarbeitenden Industrie und/oder im Hoch-, Tief- und Leitungsbaugewerbe.

21. Verwendung einer Farbzubereitung oder einer Farbzubereitung nach dem Herstellungsverfahren gemäß einem der vorhergehenden Ansprüche zur Markierung in Gartenbaubetrieben und/oder bei Sprayart, insbesondere bei Grafiftiarbeiten.

22. Druckgaspackung, insbesondere Spraydose, die eine Farbzubereitung mit Bindemitteln, Füllstoffen und Pigmenten enthält,
**dadurch gekennzeichnet,**
**dass** Wachs als Bindemittel und Füllstoff dient, wobei die Farbzubereitung mit einem Treibmittel abgefüllt ist und das Wachs in der Farbzubereitung gelöstes Paraffin-Wachs ist.

## Claims

1. A colour preparation containing binding agents, fillers and pigments,
**characterized in that**
the wax acts as a binding agent, wherein the colour preparation and a fuel are filled together into a compressed gas package, in particular into a spray can, and the wax in the colour preparation is dissolved paraffin wax.

2. A colour preparation according to claim 1,
**characterized in that**
the fuel consists of gases which are liquefied under pressure, preferably n-butane, isobutane, propane, butane, dimethyl ether and their mixtures.

3. A colour preparation according to claim 1,
**characterized in that**
the fuel consists of compressed gases such as CO2, N2, N2O and their mixtures.

4. A colour preparation according to claim 1,
**characterized in that**
the fuel consists of a mixture of gases which have been liquefied and compressed under pressure.

5. A colour preparation according to any one of the preceding claims,
**characterized in that**
the pigments are present as natural pigments which are anorganic or organic.

6. A colour preparation according to any one of claims 1 to 4,
**characterized in that**
the pigments are present as synthetic pigments, which are anorganic or organic.

7. A colour preparation according to any one of claims 1 to 6,
**characterized in that**
the pigments are present as luminous pigments (luminescent dyes).

8. A colour preparation according to any one of claims 5 to 7,
**characterized in that**
the pigments are present as a mixture of the different pigment types.

9. A method for manufacturing a colour preparation in which binding agents, fillers and pigments are incorporated,
**characterized in that**
the wax is incorporated as a binding agent and filler, wherein the colour preparation is filled, in particular into a spray can, and the wax in the colour preparation is dissolved paraffin wax.

10. A method according to claim 1,
**characterized in that**
the wax is incorporated as a binding agent and filler into a mixture with conventional binding agents and fillers.

11. A method according to either of claims 9 or 10,
**characterized in that**
a gas is added as a fuel which has been liquefied under pressure.

12. A method according to either of claims 9 or 10,
**characterized in that**
a compressed gas is added as a fuel.

13. A method according to either of claims 9 or 10,
**characterized in that**
as a fuel, a mixture is added of gases which have been liquefied under pressure and compressed gases.

14. A method according to any one of claims 11 to 13,
**characterized in that**
a fuel gas is used as a fuel which can partially dissolve in the colour preparation and/or mix with said preparation.

15. A method according to claim 14,
**characterized in that**
the gas which is partially dissolved or mixed with the colour preparation consists of CO₂ and/or N₂ and/or N₂O.

16. A method according to any one of claims 9 to 15,
**characterized in that**
the pigments are incorporated as natural pigments which are of an anorganic or organic nature.

17. A method according to any one of claims 9 to 15,
**characterized in that**
the pigments are incorporated as synthetic pigments which are of an anorganic or organic nature.

18. A method according to any one of the preceding claims,
**characterized in that**
the pigments are incorporated as luminous pigments (luminescent dyes).

19. The use of a colour preparation or of a colour preparation according to the manufacturing method in accordance with any one of the preceding claims for the purpose of marking in the forestry and/or agriculture sectors.

20. The use of a colour preparation or of a colour preparation according to the manufacturing method in accordance with any one of the preceding claims for the purpose of marking in the wood processing industry and/or in the structural, civic and utility line construction industries.

21. The use of a colour preparation or of a colour preparation according to the manufacturing method in accordance with any one of the preceding claims for the purpose of marking in landscape gardening companies and/or with spray-art, in particular for graffiti work.

22. A compressed gas package, in particular a spray can, which contains a colour preparation with binding agents, fillers and pigments,
**characterized in that**
the wax acts as a binding agent and filler, wherein the colour preparation is filled with a fuel and the wax in the colour preparation is dissolved paraffin wax.

## Revendications

1. Préparation de colorants contenant des liants, des agents de charge et des pigments,
**caractérisée en ce que**
de la cire sert de liant et d'agent de charge, la préparation de colorants et un agent propulseur étant mis ensemble dans une bombe aérosol, en particulier dans un vaporisateur, et la cire étant de la cire de paraffine diluée dans la préparation de colorants.

2. Préparation de colorants selon la revendication 1,
**caractérisée en ce que**
l'agent propulseur se compose de gaz liquéfiés sous pression, de préférence du n-butane, de l'isobutane, du propane, du butane, du diméthyléther, et de leurs mélanges.

3. Préparation de colorants selon la revendication 1,
**caractérisée en ce que**
l'agent propulseur se compose de gaz comprimés, comme le CO2, le N2, le N2O, et de leur mélanges.

4. Préparation de colorants selon la revendication 1,
**caractérisée en ce que**
l'agent propulseur se compose d'un mélange de gaz liquéfiés sous pression et de gaz comprimés.

5. Préparation de colorants selon l'une des revendications précédentes,
**caractérisée en ce que**
les pigments sont des pigments existants dans la nature, lesquels sont inorganiques ou organiques.

6. Préparation de colorants selon l'une des revendications 1 à 4,
**caractérisée en ce que**
les pigments sont des pigments synthétiques, lesquels sont inorganiques ou organiques.

7. Préparation de colorants selon l'une des revendications 1 à 6,
**caractérisée en ce que**
les pigments sont des pigments UV (colorants luminescents).

8. Préparation de colorants selon l'une des revendications 5 à 7,
**caractérisée en ce que**
les pigments sont des mélanges de différents types de pigments.

9. Procédé pour la fabrication d'une préparation de colorants, au cours duquel des liants, des agents de charge et des pigments sont incorporés,
**caractérisé en ce que**
de la cire est incorporée comme liant et comme agent de charge, la préparation de colorants étant mise avec un agent propulseur dans une bombe aérosol, en particulier dans un vaporisateur, et la cire étant de la cire de paraffine diluée dans la préparation de colorants.

10. Procédé selon la revendication 1,
**caractérisé en ce que**
de la cire est incorporée comme liant et comme agent de charge dans un mélange comprenant des liants et des agents de charge conventionnels.

11. Procédé selon l'une des revendications 9 ou 10,
**caractérisé en ce qu'**
un gaz liquéfié sous pression est ajouté comme agent propulseur.

12. Procédé selon l'une des revendications 9 ou 10,
**caractérisé en ce qu'**
un gaz comprimé est ajouté comme agent propulseur.

13. Procédé selon l'une des revendications 9 ou 10,
**caractérisé en ce qu'**
un mélange de gaz liquéfiés sous pression et de gaz comprimés est ajouté comme agent propulseur.

14. Procédé selon l'une des revendications 11 à 13,
**caractérisé en ce qu'**
un gaz propulseur est employé comme agent propulseur, lequel peut être partiellement dilué et/ou mélangé dans la préparation de colorants avec celle-ci.

15. Procédé selon la revendication 14,
**caractérisé en ce que**
le gaz partiellement dilué ou mélangé dans la préparation de colorants se compose de CO2 et/ou de N2 et/ou de N20.

16. Procédé selon l'une des revendications 9 à 15,
**caractérisé en ce que**
les pigments sont incorporés comme pigments existants dans la nature, lesquels sont de nature inorganique ou organique.

17. Procédé selon l'une des revendications 9 à 15,
**caractérisé en ce que**
les pigments sont incorporés comme pigments synthétiques, lesquels sont de nature inorganique ou organique.

18. Procédé selon l'une des revendications précédentes,
**caractérisé en ce que**
les pigments sont incorporés comme pigments UV (colorants luminescents).

19. Utilisation d'une préparation de colorants ou d'une préparation de colorants suivant le procédé de fabrication selon l'une des revendications précédentes, pour le marquage dans la sylviculture ou l'agriculture.

20. Utilisation d'une préparation de colorants ou d'une préparation de colorants suivant le procédé de fabrication selon l'une des revendications précédentes, pour le marquage dans l'industrie de transformation du bois et/ou dans les entreprises de construction en hauteur, de construction souterraine et de construction de lignes.

21. Utilisation d'une préparation de colorants ou d'une préparation de colorants suivant le procédé de fabrication selon l'une des revendications précédentes, pour le marquage dans les entreprises d'horticulture et/ou pour la peinture à la bombe, en particulier pour les graffitis.

22. Bombe aérosol, en particulier vaporisateur, comprenant une préparation de colorants avec des liants, des agents de charge et des pigments,
**caractérisée en ce que**
de la cire sert comme liant et comme agent de charge, la préparation de colorants étant mise en aérosol avec un agent propulseur et la cire étant de la cire de paraffine diluée dans la préparation de colorants.
